# EUROPEAN PATENT APPLICATION

(11) **EP 2 256 726 A1**
(43) Date of publication of application: **01.12.2010**
(21) Application number: 09305485.6
(22) Date of filing: 27.05.2009
(51) Int. Cl.: G11B 7/0065

(54) **Holographic storage system with reduced noise**

(71) Applicant: Thomson Licensing, 92130 Issy-les-Moulineaux (FR)
(72) Inventor: Malki, Oliver, 78176, Fuetzen (DE); Przygodda, Frank, 78050, Villingen-Schwenningen (DE); Trautner, Heiko, 78089, Unterkirnach (DE)
(74) Representative: Schmidt-Uhlig, Thomas

(57) **Abstract**

The present invention relates to an apparatus (1) and a method for reading from holographic storage media (13), and more specifically to an apparatus (1) and a method for reading from holographic storage media (13) with reduced noise.

According to the invention, a light source (2) is provided for generating at least a reference beam (5), and an objective lens (12) for focusing the reference beam (5) into the holographic storage medium in order to generate a reconstructed object beam (14). One or more optical elements (12, 15) within the optical path of the reference beam (5) or the reconstructed object beam are mounted on at least one mechanical modulator (32), which oscillates with an oscillation frequency.

## Description

The present invention relates to an apparatus and a method for reading from holographic storage media, and more specifically to an apparatus and a method for reading from holographic storage media with reduced noise.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with an array detector.

For a holographic storage system usually a common coherent light source is used for generating both the reference beam and the object beam. A light source with a long coherence length is usually desirable, because in this case the adjustment of all optical components requires less accuracy of the path length. For Fourier plane holography the tolerable differences of the path length are limited so that a minimum coherence is required. Unfortunately, undesired reflections at the surfaces of the optical components of the holographic storage system may increase the noise level due to coherent addition at the location of the array detector. The coherent addition degrades the quality of the detector image. The incoherent addition of two signals E1 and E2 results in a constant noise level with an intensity I=|E₁|²+|E₂|². Though this constant noise level affects readout, it can easily be compensated during the detection, e.g. by subtraction. In contrast, the coherent addition results in a modulated background with an intensity I=|E₁|²+|E₂|²+2·E₁·E₂·cos(ϕ). The modulated background appears as a fringe pattern on the array detector, where the positions of the fringes depend on the phase difference ϕ caused by a path length difference. Because of these fringes the background is much more difficult to compensate.

To reduce the resulting undesired interference patterns the surfaces of the optical components need to be provided with an anti-reflection coating, which increases the cost of these optical components. Alternatively, the reflected light has to be attenuated, e.g. by the application of a polarizer in the optical path. In any case, the undesired interference patterns can only be reduced to a limited extent.

Recently, a homodyne detection scheme has been proposed for a holographic data storage system. Homodyne detection denotes a detection technique, where a signal carrier is superimposed coherently with the signal of a local oscillator. In holographic data storage the signal carrier is the reconstructed object beam read-out from the holographic storage medium. The local oscillator is usually a plane wavefront generated with the same light source as the read-out beam. Both beams are superimposed coherently on the array detector, where constructive and destructive interference occurs.

For example, US 2008/0130461 discloses a holographic storage system using a homodyne detection scheme. For homodyne detection a first light beam diffracted at a hologram and a second light beam reflected or transmitted by a reflecting layer of a holographic storage medium are superimposed on a detector. In this document bit-wise data storage is used, i.e. each hologram encodes a single bit, not a complete data page.

The principle of homodyne detection is advantageously employed if a phase SLM is used for data coding. In this case the data pixels of the object beam have the phase 0 or π, representing two states of a modulation code. Depending on the phase relation with respect to the local oscillator, constructive and destructive interference results in bright or dark pixels on the detector during read-out.

Phase SLMs offer a higher optical throughput, since all pixels are in an on-state just with different phases. In contrast, an amplitude SLM blocks the light of the dark pixels. Usually the number of pixels with 0 and π phase are balanced in order to suppress the formation of a DC-peak in the focal plane. A balanced code in combination with a phase SLM also ensures a higher data page capacity compared to an amplitude SLM, where the number of on-pixels is usually smaller than that of the off-pixels.

One important advantage of homodyne detection is the amplification of the signal. Since the detected data page results from the constructive and destructive interference of the reconstructed object beam and the local oscillator, the intensity of the detected on-pixels resulting from constructive interference is even larger than the intensity of the on-pixels of the reconstructed object beam themselves. The amplification can even be increased if the local oscillator is stronger than the reconstructed object beam.

For a holographic storage system with a homodyne detection scheme the noise caused by undesired reflections at the surfaces of the optical components becomes an even more severe problem. This is due to the fact that the disturbing light is also amplified by the homodyne detection scheme.

It is an object of the present invention to propose a solution for reading from holographic storage media with reduced noise.

According to the invention, this object is achieved by an apparatus for reading from a holographic storage medium, with a light source for generating at least a reference beam, an objective lens for focusing the reference beam into the holographic storage medium in order to generate a reconstructed object beam, and at least one mechanical modulator for oscillating one or more optical elements within the optical path of the reference beam or the reconstructed object beam with an oscillation frequency.

Similarly, a method for reading from a holographic storage medium has the steps of:
- generating a reference beam;
- focusing the reference beam into the holographic storage medium in order to generate a reconstructed object beam; and
- oscillating one or more optical elements within the optical path of the reference beam or the reconstructed object beam with an oscillation frequency.

During readout the influence of undesired reflections from surfaces of optical components in the beam path is reduced by transforming these reflections from coherent light to incoherent light. The incoherent reflections cause a much smaller or even zero intensity modulation on the array detector. As a consequence, the overall signal to noise ratio on the array detector is increased. The transformation from coherent light to incoherent light is achieved by small mechanical movements of at least some of those optical components whose surfaces cause the undesired coherent reflections. Usually the objective lens for focusing the reference beam into the holographic storage medium causes the largest part of the undesired reflections. Therefore, a significant improvement of the signal to noise ratio is already achieved when only this objective lens is oscillated.

Favorably, the oscillations have an amplitude below a quarter of the wavelength of the reference beam. Such sub-wavelength modulations are sufficient to reduce the noise level, but do not significantly influence the accuracy of the optical setup. Of course, larger movements also reduce the coherence. However, they may impact the alignment of the optical components.

Advantageously, the oscillation frequency is a high frequency compared to the frequency of an image acquisition of an array detector for detecting the reconstructed object beam. This means that during the exposure time of a single hologram the optical components perform multiple oscillation cycles. As a consequence the array detector acquires an average intensity.

Alternatively, a calculating means is provided for calculating the mean of a sequence of images of the array detector at different oscillation phases of the mechanical modulator. A sequence of images of the array detector is taken, where each image has a different random phase of the undesired reflection. The mean is then calculated afterwards numerically. Though this solution takes a little more time and needs more numerical power, the requirements for the mechanical modulator are reduced.

Advantageously, a writing path is provided for generating an object beam. Though the present invention improves readout of holographic data pages, it is likewise useful in an apparatus for writing to holographic storage media. Typically such an apparatus is also capable of reading from holographic storage media.

Preferably, a beam splitter is provided for generating a local oscillator beam for homodyne detection of the reconstructed object beam. As homodyne detection is a further approach to increase signal to noise ratio, the combination of homodyne detection and the proposed of coherent reflections into incoherent reflections results in a greatly improved performance.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates an apparatus according to the invention for reading from holographic storage media,
- Fig. 2: shows the apparatus of Fig. 1 supplemented with a writing path using a counter-propagating architecture,
- Fig. 3: illustrates an exemplary apparatus according to the invention for reading from holographic storage media with homodyne detection, and
- Fig. 4: shows the apparatus of Fig. 3 supplemented with a writing path using a counter-propagating architecture.

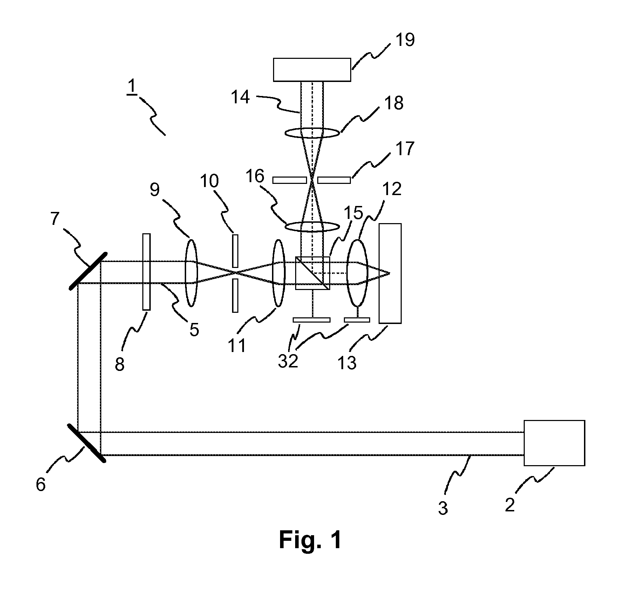

Fig. 1 illustrates an apparatus 1 according to the invention for reading from a holographic storage medium 13. A light source 2 with a large coherence length emits a light beam 3, which serves as a reference beam 5 and is directed towards a holographic storage medium 13 by two mirrors 6, 7. Before being focused into a holographic storage layer of the holographic storage medium 13 by a first objective lens 12, the reference beam 5 passes through an optional phase mask 8 for imprinting a phase pattern on the reference beam 5 and an optional spatial filter consisting of two further objective lenses 9, 11 and a filter aperture 10. Due to the interaction of the reference beam 5 and a hologram located in the holographic storage layer of the holographic storage medium 13, a reconstructed object beam 14 is generated. This reconstructed object beam 14 is collimated by the first objective lens 12 and directed onto an array detector 19, e.g. a CCD camera, by a first beam splitter 15. Before it impinges on the array detector 19, the reconstructed object beam 14 passes through a further optional spatial filter consisting of two objective lenses 16, 18 and a filter aperture 17. Because of the large coherence length of the light source 2 the reconstructed object beam 14 would be mutually coherent with disturbing light, e.g. due to a reflection at the first objective lens 12. Such an undesired reflection, which is illustrated by a dashed line from the first objective lens 12 to the array detector 19, would also reach the array detector 19 and cause a disturbing interference pattern. In order to avoid such an interference pattern, the first objective lens 12 and, in the present example, also the first beam splitter 15 are mounted on a mechanical modulator 32, e.g. a Piezo oscillator. The mechanical modulator 32 oscillates with an arbitrary high frequency compared to the frequency of the image acquisition of the array detector 19, i.e. the reciprocal of the exposure time, so that the array detector 19 acquires an average intensity. The oscillations have a small amplitude below a quarter of the wavelength of the reference beam 5. Due to this small amplitude the focus of the reference beam 5 within the holographic storage medium 13 remains unaffected in a first approximation. Because of the reflections the path length differences are actually twice as large, which results in a path length difference of up to half of the wavelength of the reference beam 5. The oscillation leads to a randomization of the phase of the undesired reflections. In other words, the reflected light is transformed from coherent light into incoherent light, which is easier to handle. Alternatively a sequence of images of the array detector 19 is taken, each image having a different random phase of the undesired reflection. The mean is then calculated afterwards numerically. Though this solution takes a little more time and needs more numerical power, the requirements for the mechanical modulator 32 are reduced.

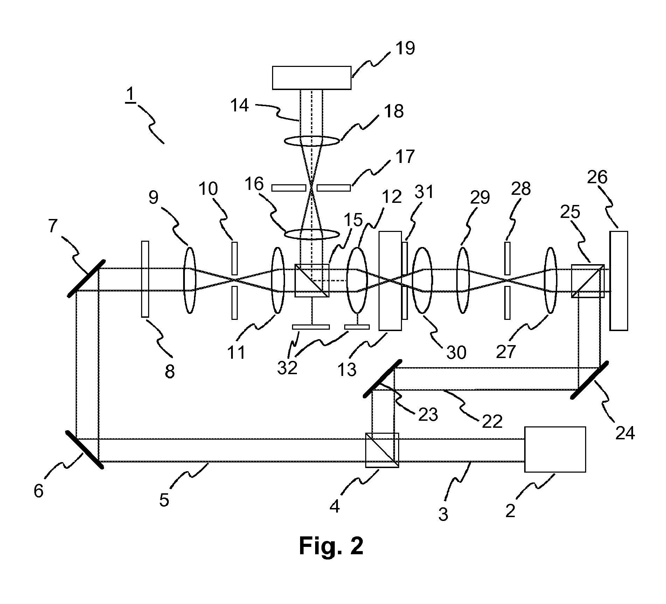

Fig. 2 shows the apparatus of Fig. 1 supplemented with a writing path using a counter-propagating architecture. Of course, the invention is not limited to a counter-propagating architecture. A second beam splitter 4 splits an object beam 22 from the light beam 3 emitted by the light source 2, which is directed by two further mirrors 23, 24 and a third beam splitter 25 onto a reflective spatial light modulator 26. The reflective spatial light modulator 26 imprints a data page, i.e. a data pattern, onto the object beam 22. The reflected object beam 22 passes through the third beam splitter 25 and a further optional spatial filter consisting of two objective lenses 27, 29 and a filter aperture 28 and is focused by a second objective lens 30 into the holographic storage layer of the holographic storage medium 13. Due to the interference between the object beam 22 and the reference beam 5 a hologram is recorded in the holographic storage layer of the holographic storage medium 13. During readout of a hologram an aperture stop 31 removes all undesired reflections caused within the path of the object beam 22.

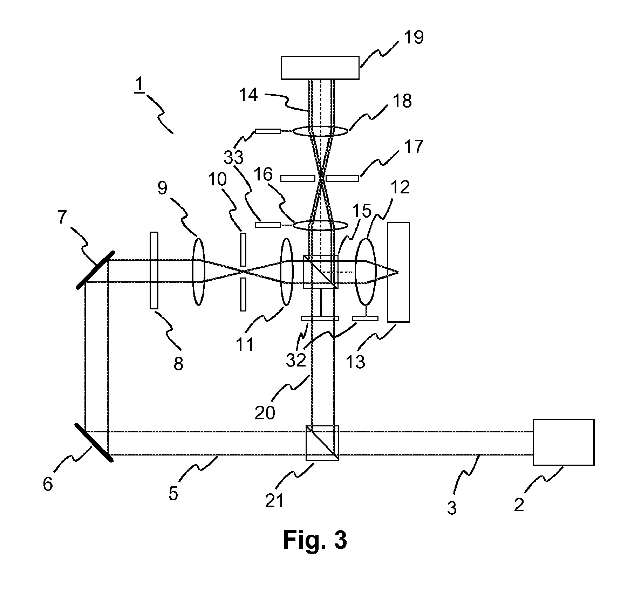

Fig. 3 illustrates an apparatus 1 for reading from a holographic storage medium 13 using a counter-propagating architecture with homodyne detection. The apparatus 1 is largely identical to the apparatus of Fig. 1. However, a fourth beam splitter 21 splits a local oscillator beam 20 from the light beam 3 emitted by the light source 2, which is directed towards the array detector 19. At the location of the array detector 19 the reconstructed object beam 14 interferes with the local oscillator beam 20. In the figure the local oscillator beam 20 and the reconstructed object beam 14 are slightly shifted for better clarity. The path of the local oscillator beam 20 from the third beam splitter 21 to the array detector 19 has an arbitrary length. Because of the large coherence length of the light source 2 the local oscillator beam 20 and the reconstructed object beam 14 are mutually coherent. The homodyne detection thus enables an amplification of the reconstructed object beam 14. In order to avoid the amplification of disturbing light, which again is illustrated by a dashed line, also the two further objective lenses 16, 18 of the spatial filter in the path of the reconstructed object beam 14 are mounted on a mechanical modulator 33, e.g. a Piezo oscillator. The mechanical modulator 33 oscillates with an arbitrary high frequency compared to the frequency of the image acquisition of the array detector 19.

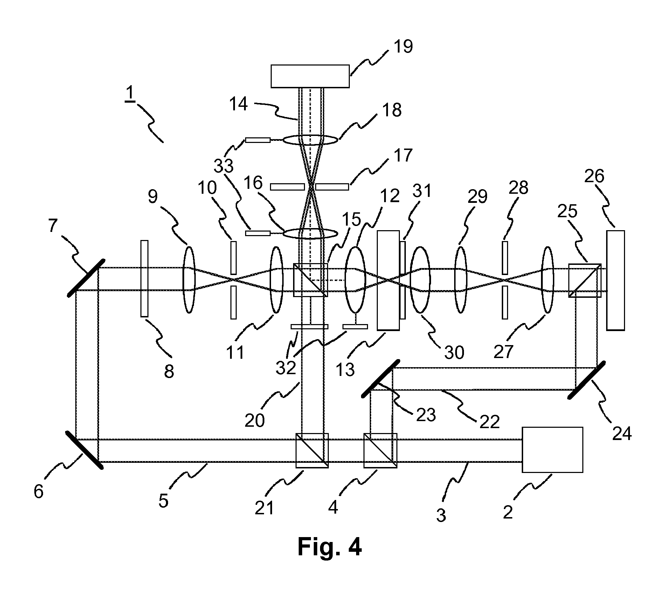

Fig. 4 shows the apparatus of Fig. 3 supplemented with a writing path. As this writing path is identical to the writing path explained with reference to Fig. 2, a detailed description is omitted at this point.

## Claims

1. Apparatus (1) for reading from a holographic storage medium (13), with a light source (2) for generating at least a reference beam (5), and an objective lens (12) for focusing the reference beam (5) into the holographic storage medium in order to generate a reconstructed object beam (14), **characterized in that** the apparatus has at least one mechanical modulator (32) for oscillating one or more optical elements (12, 15) within the optical path of the reference beam (5) or the reconstructed object beam (14) with an oscillation frequency.

2. Apparatus according to claim 1, **wherein** the oscillation frequency is a high frequency compared to the frequency of an image acquisition of an array detector (19) for detecting the reconstructed object beam (14).

3. Apparatus according to claim 1, **further** including means for calculating the mean of a sequence of images of the array detector (19) at different oscillation phases of the mechanical modulator (32).

4. Apparatus according to one of claims 1 to 3, **wherein** the oscillations have an amplitude below a quarter of the wavelength of the reference beam (5).

5. Apparatus according to one of the preceding claims, **further** having a writing path for generating an object beam (22).

6. Apparatus according to one of the preceding claims, **further** having a beam splitter (21) for generating a local oscillator beam (20) for homodyne detection of the reconstructed object beam (14).

7. Method for reading from a holographic storage medium (13), **having** the steps of:
- generating a reference beam (5);
- focusing the reference beam (5) into the holographic storage medium in order to generate a reconstructed object beam (14); and
- oscillating one or more optical elements (12, 15) within the optical path of the reference beam (5) or the reconstructed object beam with an oscillation frequency.

8. Method according to claim 7, **wherein** the oscillation frequency is a high frequency compared to the frequency of an image acquisition of an array detector (19) for detecting the reconstructed object beam (14).

9. Method according to claim 7, **further** including the steps of:
- detecting a sequence of images of the array detector (19) at different oscillation phases; and
- calculating the mean of the detected sequence of images.

10. Method according to one of claims 7 to 9, **wherein** the one or more optical elements (12, 15) are oscillated with an amplitude below a quarter of the wavelength of the reference beam (5).

11. Method according to one of claims 7 to 10, **further** having the step of generating a local oscillator beam (20) for homodyne detection of the reconstructed object beam (14).
